# EUROPEAN PATENT APPLICATION

(11) **EP 4 475 038 A1**
(43) Date of publication of application: **11.12.2024**
(21) Application number: 24171084.7
(22) Date of filing: 18.04.2024
(51) Int. Cl.: G06N 3/0495, G06N 3/084

(54) **BINARY NEURAL NETWORK APPARATUS AND TRAINING METHOD THEREOF**

(30) Priority: 07.06.2023 KR 20230073080
(71) Applicant: Samsung Electronics Co., Ltd., Suwon-si, Gyeonggi-do 16677 (KR)
(72) Inventor: HWANG, Chansol, 16677 Suwon-si (KR); SONG, Wonseop, 16677 Suwon-si (KR); JANG, Dongwon, 16677 Suwon-si (KR); SUNG, Young Hun, 16677 Suwon-si (KR); OH, Dokwan, 16677 Suwon-si (KR)
(74) Representative: Arnold & Siedsma

(57) **Abstract**

A binary neural network apparatus including a binarized last layer is provided. According to an embodiment of the present disclosure, the binary neural network apparatus includes: a binary neural network including a first layer, one or more second layers, and a third layer, wherein the one or more second layers are provided between the first layer and the third layer, and the third layer has binary input and binary weights and is configured to output a binarized bit sequence; and a non-binary converter configured to convert the binarized bit sequence into non-binary data and output the non-binary data.

## Description

### BACKGROUND

### 1. Field

The following description relates to a binary neural network apparatus including a binarized last layer, and a method of training the binary neural network.

### 2. Description of the Related Art

With the development of artificial neural network technology, artificial neural networks are used in various types of electronic systems for analyzing input data and extracting valid information. Particularly, the Convolution Neural Network (CNN) has excellent performance in extracting spatial features included in an image. However, a convolution operation for running the convolutional neural network requires high input/output bandwidth. A convolution multiplication operation may be replaced with a binary operation by binarizing the weights and activation functions. A general binary neural network may increase speed and significantly reduce required memory capacity, but accuracy may be reduced due to loss of information. In order to maintain the accuracy, the general binary neural network has been developed in a manner that provides a multiplication operation while maintaining full-precision in an input layer and a last layer of the neural network.

### SUMMARY

According to an aspect of the present disclosure, a binary neural network apparatus may include: a binary neural network including a first layer, one or more second layers, and a third layer, wherein the one or more second layers are provided between the first layer and the third layer, and the third layer has a binary input and binary weights and is configured to output a binarized bit sequence; and a non-binary converter configured to convert the binarized bit sequence into non-binary data and output the non-binary data.

The third layer may be a last layer of the binary neural network, and the non-binary converter is configured to convert the binarized bit sequence into the non-binary data by using a predefined linear or nonlinear function.

The third layer may be a last layer of the binary neural network, and the non-binary converter is configured to convert the binarized bit sequence into the non-binary data by using a predefined lookup table.

The third layer may be a last layer of the binary neural network, and the non-binary converter is configured to convert the binarized bit sequence into the non-binary data by using a position where a last activation bit is located in the binarized bit sequence.

The third layer may be a last layer of the binary neural network, and the non-binary converter is configured to convert the binarized bit sequence into the non-binary data by using a number of activation bits in the binarized bit sequence.

The third layer may be a last layer of the binary neural network, and the non-binary converter is configured to convert the binarized bit sequence into the non-binary data by using a weighted sum for each position in the binarized bit sequence.

The first layer of the binary neural network may have a binary input.

The binary neural network apparatus may further include a first binary converter configured to convert non-binary data into a bit sequence to be used as the binary input of the first layer.

In a training operation, the binary neural network may be configured to convert a non-binary ground truth into a ground-truth bit sequence by using a second binary converter, and is trained based on a loss between the converted ground-truth bit sequence and the binarized bit sequence output by the third layer.

In a training operation, in response to the non-binary converter being defined to be differentiable, the binary neural network may be trained based on a loss between a non-binary ground truth and non-binary data which is an output of the non-binary converter.

According to another aspect of the present disclosure, a training method of a binary neural network including a first layer, one or more second layers, and a third layer, the method may include: obtaining first output data for training data from the first layer; obtaining second output data for the first output data from the one or more second layers; obtaining a bit sequence as third output data for the second output data from the third layer having a binary input and binary weights; and training the binary neural network by calculating a loss of a loss function based on the bit sequence and a non-binary ground truth.

The training method may further include converting the bit sequence into non-binary data by using a non-binary converter, wherein the calculating of the loss may include, in response to the non-binary converter being defined to be differentiable, calculating the loss based on the converted non-binary data and the non-binary ground truth.

The converting of the bit sequence into the non-binary data may include converting the bit sequence into the non-binary data by using a position where a last activation bit is located in the bit sequence.

The converting of the bit sequence into the non-binary data may include converting the bit sequence into the non-binary data by using a number of activation bits in the bit sequence.

The converting of the bit sequence into the non-binary data may include converting the bit sequence into the non-binary data by using a weighted sum for each position in the bit sequence.

The first layer may have a binary input, wherein the method may further include, by using a first binary converter, converting non-binary training data into binary training data and providing the binary training data to the first layer.

The training method may further include, by using a second binary converter, converting the non-binary ground truth into a ground-truth bit sequence, wherein the calculating of the loss may include calculating the loss based on the bit sequence and the converted ground-truth bit sequence.

According to another aspect of the present disclosure, an electronic device may include: a memory configured to store an image, and weights and activation functions of a binary neural network; and at least one processor configured to load the image from the memory and process the image through the binary neural network, wherein the binary neural network includes a first layer, one or more second layers, and a third layer, the one or more second layers are provided between the first layer and the third layer, and the third layer has binary input and binary weights and is configured to output a binarized bit sequence; and a non-binary converter configured to convert the binarized bit sequence into non-binary data and output the non-binary data.

The binary neural network may be trained based on at least one of a ground truth, the binarized bit sequence, and the non-binary data.

The electronic device may further include a video codec device or an image signal processing device that uses the binary neural network to process the image.

### BRIEF DESCRIPTION OF THE DRAWINGS

FIG. 1 is a block diagram illustrating a binary neural network apparatus according to an embodiment of the present disclosure.
FIG. 2 is a diagram explaining examples of a conversion method of a non-binary converter.
FIG. 3 is a block diagram illustrating a binary neural network apparatus according to another embodiment of the present disclosure.
FIG. 4 is a flowchart illustrating an inference method according to an embodiment of the present disclosure.
FIG. 5 is a flowchart illustrating an inference method according to another embodiment of the present disclosure.
FIG. 6 is a block diagram illustrating a training apparatus according to an embodiment of the present disclosure.
FIG. 7 is a block diagram illustrating a training apparatus according to another embodiment of the present disclosure.
FIG. 8 is a flowchart illustrating a training method according to an embodiment of the present disclosure.
FIG. 9 is a flowchart illustrating a training method according to another embodiment of the present disclosure.
FIG. 10 is a block diagram of an electronic device including a binary neural network apparatus.

### DETAILED DESCRIPTION

Details of other embodiments are included in the following detailed description and drawings. Advantages and features of the present invention, and a method of achieving the same will be more clearly understood from the following embodiments described in detail with reference to the accompanying drawings. Throughout the drawings and the detailed description, unless otherwise described, the same drawing reference numerals will be understood to refer to the same elements, features, and structures.

It will be understood that, although the terms first, second, etc. may be used herein to describe various elements, these elements should not be limited by these terms. These terms are only used to distinguish one element from another. Any references to singular may include plural unless expressly stated otherwise. In addition, unless explicitly described to the contrary, an expression such as "comprising" or "including" will be understood to imply the inclusion of stated elements but not the exclusion of any other elements. Also, the terms, such as "unit" or "module," etc., should be understood as a unit that performs at least one function or operation and that may be embodied as hardware, software, or a combination thereof.

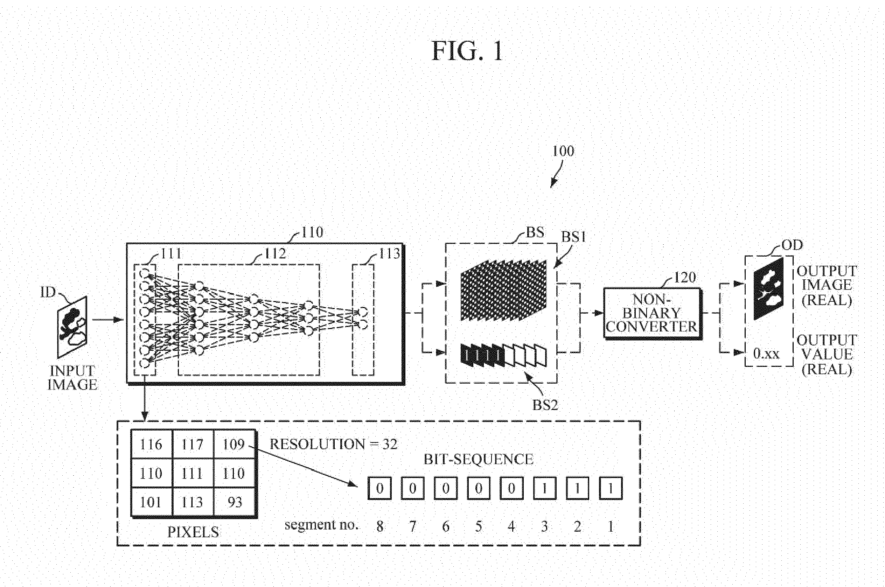

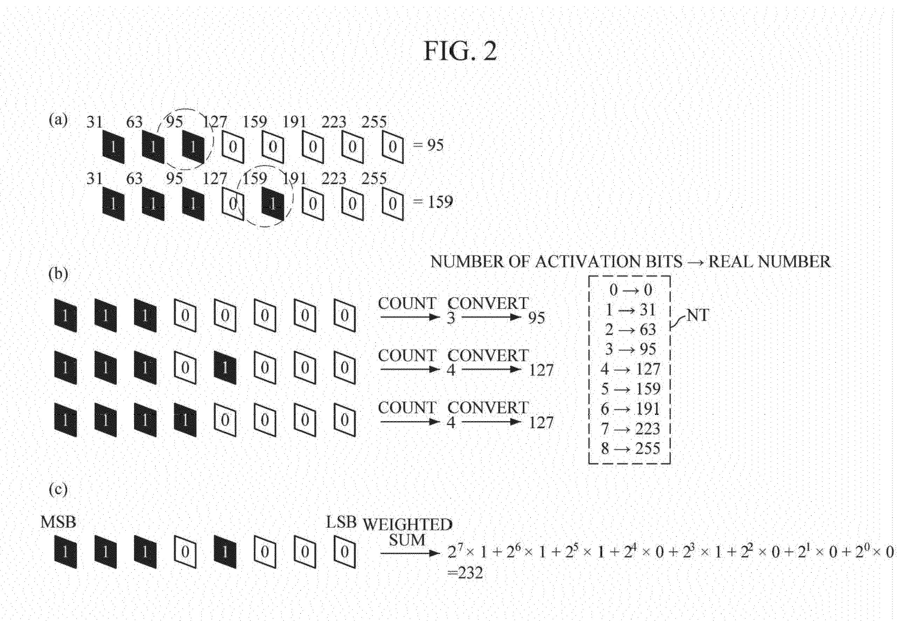

FIG. 1 is a block diagram illustrating a binary neural network apparatus according to an embodiment of the present disclosure. FIG. 2 is a diagram explaining examples of a conversion method of a non-binary converter.

The binary neural network apparatus includes a neural network for supporting performance of intellectual property (IP) core, such as an image signal processing (ISP) device or a video codec implemented in chip form, and may be included in the IP core or mounted as a separate hardware or software module in an electronic device.

Referring to FIG. 1, a binary neural network apparatus 100 may include a binary neural network 110 and a non-binary converter 120. Some of the weights and activations of the binary neural network 110 may be expressed as binary values (e.g., +1 and -1 or 1 and 0), instead of floating-point numbers, to reduce memory storage and computation requirements.

The binary neural network 110 may include a first layer 111, one or more second layers 112, and a third layer 113, in which the one or more second layers 112 are disposed between the first layer 111 and the third layer 113. The first layer 111, the one or more second layers 112, and the third layer 113 may be also referred to as an input layer, hidden layers, and an output layer, respectively.

The first layer 111 uses non-binary data ID as input. The non-binary data may be real data or a real number that represents images or has a floating number format such as a single precision floating point (FP32, also known as "32-bit floating-point") which uses 32 bits to represent the real data or the real number, a half precision floating point (FP16, also known as "16-bit floating-point") which uses 16 bits to represent the real data or the real number, a brain floating point (BF16, also known as "16-bit floating-point") which uses 16 bits to represent the real data or the real number, 8-bit Integer (int8) which uses 8 bits to represent the real data or the real number, and the like. The first layer 111 may be a convolution or linear layer having a floating-point weight and performing a full-precision floating-point operation. The first layer 111 may binarize a result of the floating-point operation and provide the result to the second layer 112. In this case, binarization is a process of quantizing floating-point data into binary data (-1 or + 1), and various binarization methods may be used. For example, hyperbolic tangent function (Tanh(x)), sine function (Sign(x)), or Htanh(x), and the like may be used, but the methods are not limited thereto.

In embodiments of the present disclosure, the first layer 111 may transform a real number into a binary bit sequence through a thermometer method in which the real number is encoded into a binary bit sequence within a predetermined number range. In particular, the thermometer method may include operations of selecting a number range (e.g., a range from 0 to 1), determining a number of bits (e.g., 8 bits) for representing the real number, dividing the range of the real number into segments that are each represented by one bit (e.g., segment 1 for 0 to 31, segment 2 for 32 to 63, segment 3 for 64 to 95, segment 4 for 96 to 127, segment 5 for 128 to 159, segment 6 for 160 to 191, segment 7 for 192 to 223, and segment 8 for 234 to 255 with a thermometer resolution of 32), and converting the real number into an 8-bit thermometer code (e.g., 0000111 when the real number is 109).

The second layer 112 has binary input. The second layer 112 may be a network configured to perform bitwise operations, such as exclusive NOR (XNOR) which compares two binary values (bits) and returns true (1) if both input bits are equal (either both 0 or both 1), and population count (POP-COUNT) which counts the number of set bits (bits with a value of 1) in a binary sequence, by binarizing weights and activation functions. In this case, the weights may be quantized to 1-bit and the activation functions consist of 1-bit or multi-bit. The second layer 112 may perform a binary operation on the binary input provided from the first layer 111, and may provide a binary output to the third layer 113.

The third layer 113 may include binary weights and/or binary activation functions so as to perform binary operations by using the binary input provided from the second layer 112. The third layer 113 is the last layer of the binary neural network, and may perform binary operations to output a bit sequence (BS) consisting of a single bit or multiple bits.

In embodiments of the disclosure, the third layer 113 may be implemented as a convolutional layer or a linear (fully-connected) layer. When the third layer 113 is implemented as a convolutional layer, an output bit sequence (BS1) of the third layer 113 may be a feature map which is a three-dimensional (3D) tensor with dimensions of width, height, and channels. When the third layer 113 is implemented as a linear layer, an output bit sequence (BS2) of the third layer 113 may be a one-dimensional (1D) vector, which is referred to as logits or scores.

The non-binary converter 120 may convert the binarized bit sequence BS, output by the third layer 113, into non-binary data OD and may output the non-binary data. The non-binary converter 120 may be implemented in the form of a hardware chip or a software module. The non-binary converter 120 may be defined as differentiable or non-differentiable in various forms without limitation. The non-binary converter 120 may be configured to convert the bit sequence BS into the non-binary data OD by using a predefined linear or nonlinear function. Alternatively, the non-binary converter 120 may be configured to convert the bit sequence BS into the non-binary data OD by using a predefined lookup table.

FIG. 2 is a diagram explaining examples of a conversion method of a non-binary converter.

The non-binary converter 120 may employ one of various conversion methods a, b, and c as illustrated in FIG. 2, but is not particularly limited to the illustrative methods.

Referring to a conversion method (a) of FIG. 2, the non-binary converter 120 may convert the bit sequence, output by the third layer 113, into real data or a real numbers based on a position where a last activation bit is located. For example, the data may be quantized in advance by dividing real values, which are to be represented, by the number of channels. The term "channel" represents the dimension of the output bit sequence. In a conversion method (a), an example is illustrated in which real values with a range of 0 to 256 bits are defined to have 32 (256/8) channels with a resolution of 8, in which the position of the last activation bit in a first bit sequence is 3. The value of 3 corresponds to the case in which the real value is quantized by dividing 95 by 32 which is the number of channels, such that the real value corresponding to the position of the last activation bit is 95. A position of the last activation bit in a second bit sequence is 5, and a real value corresponding to the number 5 is 159. The non-binary converter 120 may output the real value by using a linear or nonlinear function, which is defined to output the real value corresponding to the position of the last activation bit, or by referring to a lookup table that maps the position to the real value.

Referring to the conversion method (b) of FIG. 2, the non-binary converter 120 may convert the bit sequence into the non-binary data by using the number of activation bits in the bit sequence. There may be a predefined lookup table NT that defines mapping between the number of activation bits and corresponding real values, or a linear/nonlinear function defined to output the real value corresponding to the number of activation bits. As the number of activation bits in the first bit sequence is 3, its corresponding real value of 95 is output, and the number of activation bits in the second bit sequence and a third bit sequence is 4, its corresponding real value of 127 is output.

Referring to a conversion method (c) of FIG. 2, the non-binary converter 120 may convert the bit sequence into the non-binary data by using a weighted sum for each position in the bit sequence. A weight may be assigned to each position in the bit sequence, in which case the weight applied to each position in the bit sequence becomes greater from a least significant bit LSB toward a most significant bit (MSB). In the conversion method (c), an example of using a binary to decimal conversion method is illustrated, but the conversion method is not limited thereto.

In a general binary neural network, a multiplication operation is performed in the last layer, and a small amount of multiplication operation may not cause a problem to software, but a separate multiplier is required for the IP core to support multiplication, which is not efficient in terms of area and usefulness. In addition, if the IP core performs multiplication through the central processing unit (CPU) and the like, without directly implementing the multiplier, input and output occurs in the Dynamic Random Access Memory (DRAM), which is not efficient in terms of power efficiency and latency. In this embodiment of the present disclosure, the last layer of the binary neural network is binarized, thereby minimizing required memory capacity, and allowing for efficient memory use.

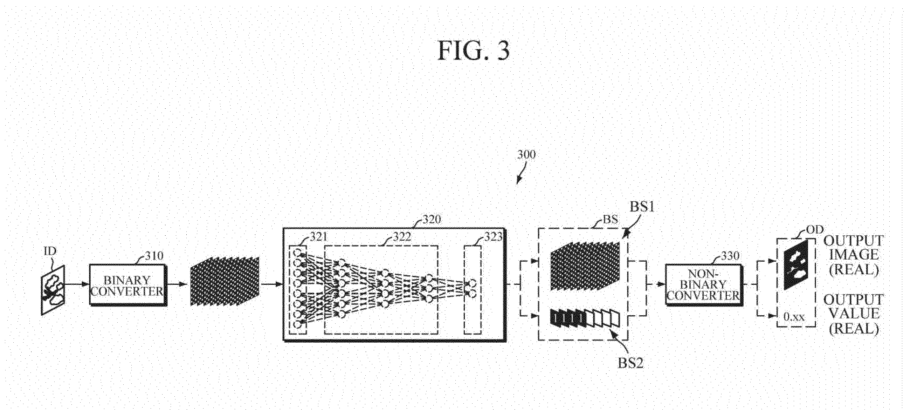

FIG. 3 is a block diagram illustrating a binary neural network apparatus according to another embodiment of the present disclosure.

Referring to FIG. 3, a binary neural network apparatus 300 includes a binary converter 310, a binary neural network 320, and a non-binary converter 330.

The binary converter 310 may convert input non-binary data ID into a binary bit sequence and may provide the binary bit sequence to the binary neural network 320. The binary converter 310 may employ various binarization methods defined to quantize floating-point data in a single channel to binary data (-1 or +1) in a plurality of channels. For example, by dividing an input value range (e.g., 256) by the number of channels (e.g., 8), the bit sequence may be converted so that each channel represents one binary bit. However, the binarization method is not limited thereto, and hyperbolic tangent function (Tanh(x)), sine function (Sign(x)), or HTanh(x), and the like may be used. The binary converter 310 may be implemented in the form of a hardware chip or a software module.

In embodiments of the present disclosure, the binary converter 310 may transform a real number into a binary bit sequence through a thermometer method in which the real number is encoded into a binary bit sequence within a predetermined number range. In particular, the thermometer method may include operations of selecting a number range (e.g., a range from 0 to 1), determining a number of bits (e.g., 8 bits) for representing the real number, dividing the range of the real number into segments that are each represented by one bit (e.g., segment 1 for 0 to 31, segment 2 for 32 to 63, segment 3 for 64 to 95, segment 4 for 96 to 127, segment 5 for 128 to 159, segment 6 for 160 to 191, segment 7 for 192 to 223, and segment 8 for 234 to 255 with a thermometer resolution of 32), and converting the real number into an 8-bit thermometer code (e.g., 0000111 when the real number is 109).

The binary neural network 320 may include a first layer 321, one or more second layers 322, and a third layer 323, in which the one or more second layers 322 may be disposed between the first layer 321 and the third layer 323.

The first layer 321 has binary input and binary weights and/or binary activation functions. The first layer 321 may perform a binary operation by using the binary data, output by the binary converter 310, as input, and may output binary data. By binarizing the first layer 321 which is an input layer of the binary neural network 320, memory capacity and efficiency may be further improved compared to the case where a multiplication operation is performed while maintaining Full-Precision in the first layer 321.

The second layer 322 may be a network having binary input and configured to perform bitwise operations, such as XNOR and POP-COUNT, by binarizing weights and activation functions. In this case, the weights may be quantized to 1-bit and the activation functions consist of 1-bit or multi-bit. The second layer 322 may perform a binary operation on the binary input provided from the first layer 321, and may provide a binary output to the third layer 323.

The third layer 323 may include binary weights and/or binary activation functions so as to perform binary operations by using the binary input provided from the second layer 322. The third layer 323 is the last layer of the binary neural network, and may perform binary operations to output a bit sequence (BS) consisting of a single bit or multiple bits.

In embodiments of the disclosure, the third layer 323 may be implemented as a convolutional layer or a linear (fully-connected) layer. When the third layer 323 is implemented as a convolutional layer, an output bit sequence (BS1) of the third layer 323 may be a feature map which is a three-dimensional (3D) tensor with dimensions of width, height, and channels. When the third layer 323 is implemented as a linear layer, an output bit sequence (BS2) of the third layer 323 may be a one-dimensional (1D) vector, which is referred to as logits or scores.

By using the conversion methods defined in various manners as illustrated in FIG. 2, the non-binary converter 330 may convert the binarized bit sequence BS, output by the third layer 323, into non-binary data OD and may output the non-binary data. The non-binary converter 330 may be implemented in the form of a hardware chip or a software module. The non-binary converter 330 may be defined as differentiable or non-differentiable in various forms without limitation. The non-binary converter 330 is differentiable when the non-binary converter 330 uses a function that changes smoothly and continuously and therefore has a derivative, so that the non-binary converter 330 can calculate a rate of change of the function at any point. In such a case, the non-binary converter 330 may predict its output based on a change to an input data value of the non-binary converter 330. The non-binary converter 330 may be configured to convert the bit sequence BS into the non-binary data OD by using a predefined linear or nonlinear function. Alternatively, the non-binary converter 330 may be configured to convert the bit sequence BS into the non-binary data OD by using a predefined lookup table.

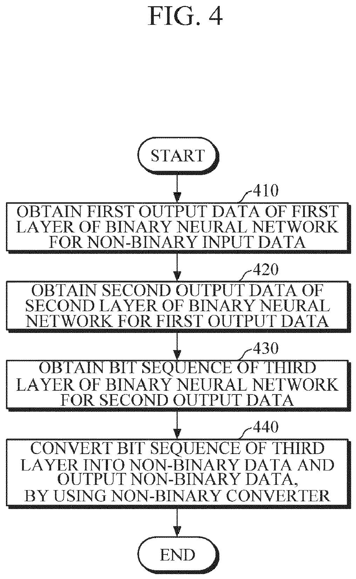

FIG. 4 is a flowchart illustrating an inference method according to an embodiment of the present disclosure.

The method of FIG. 4 may be performed by the binary neural network apparatus 100 according to the embodiment of the FIG. 1, which is described in detail above, and thus will be briefly described below.

The binary neural network apparatus 100 may input non-binary input data to the first layer of the binary neural network and may obtain first output data of the first layer in operation 410. In this case, the first layer may perform a full-precision multiplication operation and may binarize a result of the operation to output binary data.

Then, the first output data, which is the output of the first layer, may be provided to the second layer of the binary neural network, and the second layer may perform a binary operation on binary input to obtain second output data in operation 420.

Subsequently, the second output data, which is the output of the second layer, may be provided to a third layer which is the last layer of the binary neural network, and the third layer, which is configured to perform a binary operation on binary input, may obtain a binary bit sequence as third output data in operation 430.

Next, by using the non-binary converter, the binary neural network apparatus 100 may convert the binary bit sequence as the third output data into non-binary data and may output the non-binary data in operation 440. The non-binary data output by using the binary converter may be provided to a next processing step (e.g., codec, image signal processing).

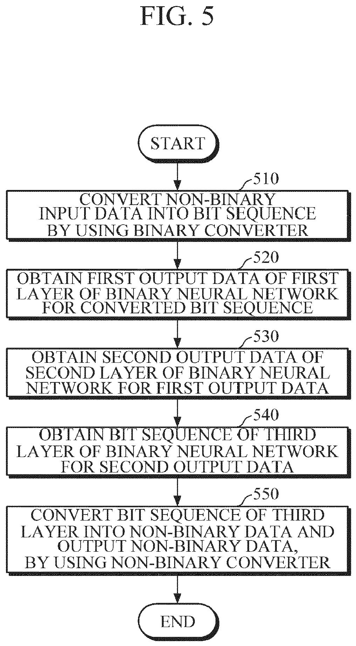

FIG. 5 is a flowchart illustrating an inference method according to another embodiment of the present disclosure.

The method of FIG. 5 may be performed by the binary neural network apparatus 300 according to the embodiment of FIG. 3, which is described in detail above and thus will be briefly described below.

The binary neural network apparatus 300 may convert non-binary input data into a binary bit sequence by using the binary converter in operation 510, and may provide the converted bit sequence to the first layer of the binary neural network.

Then, first output data may be obtained by the first layer of the binary neural network 300 in operation 520. In this case, the first layer may be a layer binarized to perform a binary operation on binary input.

Subsequently, the first output data, which is the output of the first layer, may be provided to the second layer, and the second layer may perform a binary operation on binary input to obtain second output data in operation 530.

Next, the second output data may be provided to the third layer which is the last layer of the binary neural network, and the third layer may perform a binary operation on binary input to obtain a binary bit sequence as third output data in operation 540.

Then, by using the non-binary converter, the binary neural network apparatus 300 may convert the binary bit sequence as the third output data into non-binary data and may output the non-binary data in operation 550. The non-binary data output by using the binary converter may be provided to a next processing step (e.g., codec, image signal processing)

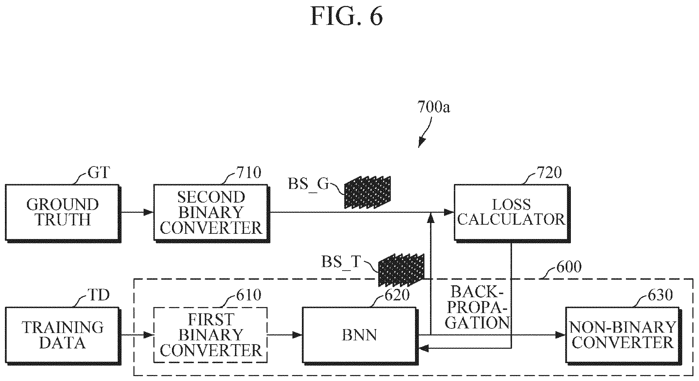

FIG. 6 is a block diagram illustrating a training apparatus according to an embodiment of the present disclosure.

Referring to FIG. 6, a training apparatus 700a includes a binary neural network apparatus 600, a second binary converter 710 for training a binary neural network 620 of the binary neural network apparatus 600, and a loss calculator 720.

As described above, the binary neural network apparatus 600 includes the binary neural network 620 in which a first layer and/or a last layer are binarized, and a non-binary converter 630 configured to convert a bit sequence, which is the output of the binary neural network 620, into non-binary data. In addition, as described above, the binary neural network apparatus 600 may further include a first binary converter 610.

Training data TD may be non-binary data (e.g., image, real value), and may be directly input to the binary neural network 620 as described above, or may be converted into a binary bit sequence by the first binary converter 610 to be input thereto. The binary neural network 620 may output a training bit sequence BS_T binarized for the training data TD.

The second binary converter 710 may convert non-binary ground truth into a ground-truth bit sequence BS_G by binarizing the non-binary ground truth. In this case, the second binary converter 710 may employ the same conversion method as the first binary converter 610, but is not necessarily limited thereto, and may employ different methods.

The loss calculator 720 may calculate the loss of a loss function by using the training bit sequence BS_T, which is output by the binary neural network 620, and ground-truth bit sequence BS_G which is converted by the second binary converter 710, and may train the binary neural network 620 by using a back-propagation method so that the loss may be minimized. The ground truth and an actual training result are in the same domain which is a bit sequence, such that various loss functions may be used by considering the bit sequence. For example, the loss function may be Intersection over Union (IoU), Binary Cross Entropy (BCE), Peak Signal-to-Noise Ratio (PSNR), Mean Squared Error (MSE), Cross-Entropy Loss, Log Likelihood Loss, frequency domain loss, etc., but is not limited thereto. In addition, the binary neural network 620 may be trained by directly calculating the loss of the loss function in binary form, such that a process of conversion to a floating-point value may be eliminated, and training speed may be improved.

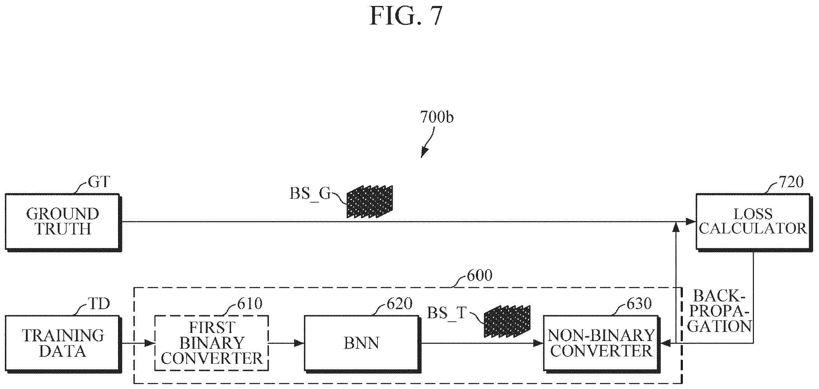

FIG. 7 is a block diagram illustrating a training apparatus according to another embodiment of the present disclosure.

Referring to FIG. 7, a training device 700b includes the binary neural network apparatus 600 and the loss calculator 720.

As described above, the binary neural network apparatus 600 includes the binary neural network 620 in which a first layer and/or a last layer are binarized, and the non-binary converter 630 configured to convert a bit sequence, which is the output of the binary neural network 620, into non-binary data. In addition, as described above, the binary neural network apparatus 600 may further include the first binary converter 610.

The training data TD may be non-binary data (e.g., image, real value), and may be directly input to the binary neural network 620 as described above, or may be converted into a binary bit sequence by the first binary converter 610 to be input thereto. The binary neural network 620 may output a training bit sequence BS_T binarized for the training data TD.

The non-binary converter 630 may convert the bit-sequence BS_T, which is the output of the binary neural network 620, into non-binary data. In this case, the non-binary converter 630 may be defined to be differentiable, such as a linear function.

The loss calculator 720 may calculate the loss of a loss function by using the non-binary data converted by the non-binary converter 630 of the binary neural network 620, and the non-binary training data TD, and may train the binary neural network 620 by using a back-propagation method so that the loss may be minimized. If the non-binary converter 630 is defined to be differentiable, backpropagation flows, such that the loss function may be designed to allow for end-to-end training by direct comparison of the non-binary data, which is the final output of the binary neural network 600, and ground truth.

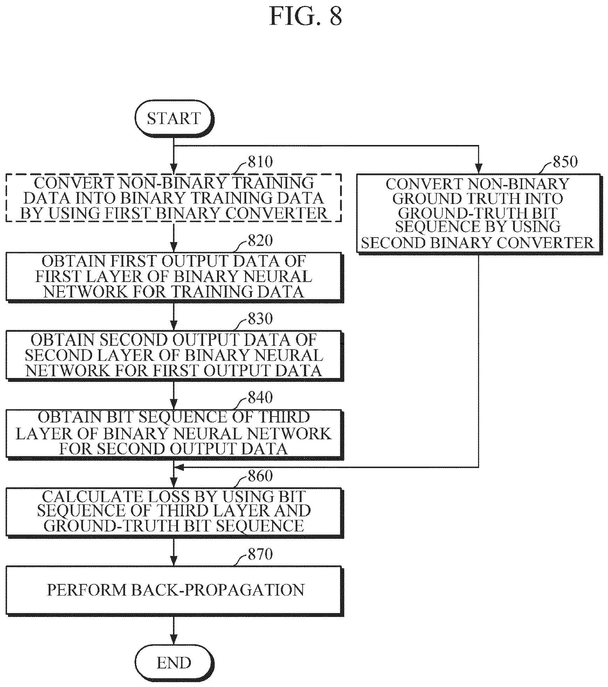

FIG. 8 is a flowchart illustrating a training method according to an embodiment of the present disclosure.

The method of FIG. 8, which is an example of a training method performed by the training apparatus 700a, will be briefly described below in order to avoid redundancy.

The training data TD may be non-binary data (e.g., image, real value), and may be directly input in the form of non-binary data to the binary neural network as described above, or may be converted into a binary bit sequence by the first binary converter to be input thereto in operation 810.

Then, the first, second, and third output data may be obtained by the first layer, the second layer, and the third layer, respectively, of the binary neural network in operations 820, 830, and 840. In this case, the last layer of the binary neural network may be binarized to output a binary bit sequence.

Subsequently, the non-binary ground truth may be converted into a ground-truth bit sequence by the second binary converter in operation 850.

Next, the loss of the loss function may be calculated in operation 860 by using the training bit sequence obtained in operation 840 and the ground-truth bit sequence converted in operation 850, and the binary neural network may be trained by performing back-propagation in operation 870 to minimize the loss.

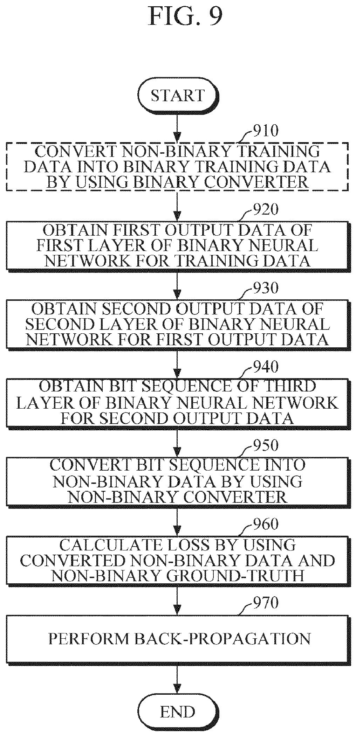

FIG. 9 is a flowchart illustrating a training method according to another embodiment of the present disclosure.

The method of FIG. 9, which is an example of a training method performed by the training apparatus 700b, will be briefly described below in order to avoid redundancy.

The training data TD may be non-binary data (e.g., image, real value), and may be directly input in the form of non-binary data to the binary neural network as described above, or may be converted into a binary bit sequence by the first binary converter to be input thereto in operation 910.

Then, the first, second, and third output data may be obtained by the first layer, the second layer, and the third layer, respectively, of the binary neural network in operations 920, 930, and 940.

Subsequently, the training bit sequence output in operation 940 may be converted into non-binary data by the non-binary converter in operation 950.

Next, the loss of the loss function may be calculated in operation 960 by using the training bit sequence obtained in operation 940 and the non-binary ground-truth, and the binary neural network may be trained by performing back-propagation in operation 970 to minimize the loss.

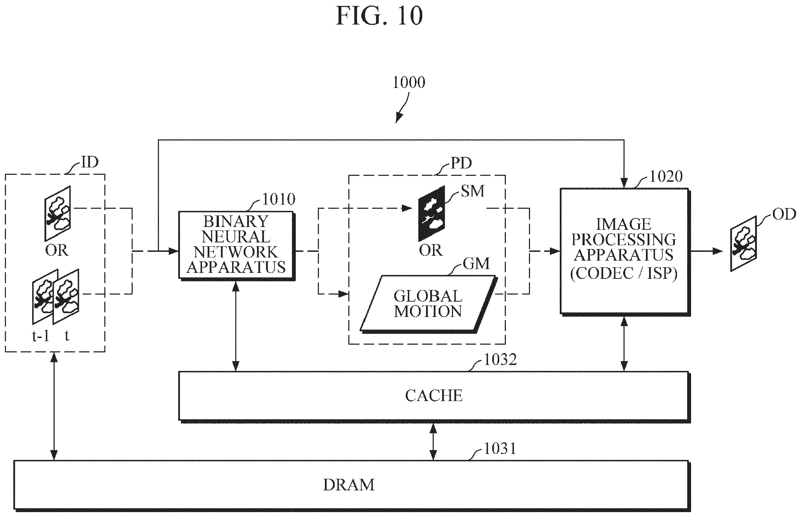

FIG. 10 is a block diagram of an electronic device including a binary neural network apparatus.

The electronic device may be various types of wearable devices, e.g., a smart watch, a smart band, smart glasses, smart earphones, a smart ring, a smart patch, and a smart necklace, and a mobile device such as a smartphone, a tablet PC, etc., or home appliances or various Internet of Things (IoT) devices (e.g., home loT device, etc.) based on Internet of Things (IoT) technology, but the electronic device is not limited thereto and may include various information processing devices.

Referring to FIG. 10, an electronic device 1000 includes a binary neural network apparatus 1010, an image processing apparatus 1020, and a memory. The binary neural network apparatus 1010 and the image processing apparatus 1020 may be implemented as separate hardware or software modules. Alternatively, the binary neural network apparatus 1010 may be integrated into the image processing apparatus 1020 to be implemented as one module.

The memory may include a Dynamic Random Access Memory (DRAM) 1031 and a cache memory 1032, but is not limited thereto. The DRAM 1031 may store input data ID such as images, videos, etc., and data such as weights and activation functions of the neural network, and the like. In addition, the memory may store various processing results of the electronic device, including, for example, preprocessed data of the binary neural network apparatus 1010, processing results OD of the image processing apparatus 1020, and the like.

The binary neural network apparatus 1010 may be the binary neural network apparatuses 100, 300, and 600 described in the above embodiments. Data ID, such as image or video frames (current frame (t) and reference frame (t-1)) may be loaded from the memory 1031 to be input to the binary neural network apparatus 1010. As described above, all the layers of the binary neural network apparatus 1010 may be binarized, or a middle layer and a last layer thereof may be binarized except an input layer. By binarizing the binary neural network, binary weights and binary activation functions may be used, such that required capacity may be reduced, allowing for efficient memory use, and thus increasing the speed of accessing weights and activation function values at the cache memory 1032 level.

The binary neural network apparatus 1010 may preprocess image or video frames input by reading the weights and activation functions from the cache memory 1032, and may output preprocessed data PD used by the image processing apparatus 1020 to optimize image processing. The preprocessed data PD, which is the output of the binary neural network apparatus 1010, may include Saliency Map (SM) or Global Motion information (GM), etc., but is not limited thereto, and may include a variety of information required to use Deep Learning Neural Network in image processing.

The image processing apparatus 1020 may be a video codec device for performing video encoding or a video stabilizer, or an image signal processing (SIP) apparatus for addressing physical deterioration including noise reduction (NR), High Dynamic Range (HDR), de-blur, Framerate up-conversion (FRUC), and the like.

By using the Saliency Map (SM) output by the binary neural network apparatus 1010, the image processing apparatus 1020 may identify an important region in an image or extract a region of interest from the image. In addition, the image processing apparatus 1020 may perform motion estimation in a video by using the Global Motion information (GM). For example, the Global Motion information (GM) may include initial search position information in a search range during motion estimation between the current frame (t) and the reference frame (t-1). The image processing apparatus 1020 may perform motion estimation after moving the center of the search range to the initial search position by using the Global Motion information (GM).

The electronic device 1000 may further include one or more processors, a communication module, a camera module, an output device, or sensor device (e.g., acceleration sensor, gyro sensor, geomagnetic sensor, proximity sensor, illuminance sensor, fingerprint sensor, etc.) configured to detect various data, an input device (e.g., a microphone, a mouse, a keyboard, and/or a digital pen (e.g., a stylus pen, etc.)) configured to receive a command and/or data to be used from a user, and the like.

The one or more processors may control components of the electronic device 1000, and may perform various data processing or computation. The image or video data, stored in the memory 1031, may be loaded by the processors to be input to the binary neural network apparatus 1010. The processors may include a main processor, e.g., a central processing unit (CPU) or an application processor (AP), etc., and an auxiliary processor, e.g., a graphics processing unit (GPU), an image signal processor (ISP), a sensor hub processor, or a communication processor (CP), etc., which is operable independently from, or in conjunction with, the main processor.

The camera module may capture still images or moving images, etc., and may store the captured images in the memory 1031. The camera module may include a lens assembly having one mor more lenses, image sensors, image signal processors, and/or flashes. The lens assembly included in the camera module may collect light emanating from a subject to be imaged.

The output device may visually/non-visually output the images captured by the camera module, and/or data processed by the image processing apparatus 1020. The output device may include a sound output device, a display device, an audio module, and/or a haptic module.

The communication module may support establishment of a direct (e.g., wired) communication channel and/or a wireless communication channel between the electronic device and other electronic device, a server, or the sensor device within a network environment, and performing of communication via the established communication channel. The communication module may transmit the images captured by the camera module, and/or the data (e.g., video encoded with the codec, etc.) processed by the image processing apparatus 1020.

The present disclosure can be realized as a computer-readable code written on a computer-readable recording medium. The computer-readable recording medium may be any type of recording device in which data is stored in a computer-readable manner.

Examples of the computer-readable recording medium include a ROM, a RAM, a CD-ROM, a magnetic tape, a floppy disc, an optical data storage, and a carrier wave (e.g., data transmission through the Internet). The computer-readable recording medium can be distributed over a plurality of computer systems connected to a network so that a computer-readable code is written thereto and executed therefrom in a decentralized manner. Functional programs, codes, and code segments needed for realizing the present invention can be readily inferred by programmers of ordinary skill in the art to which the invention pertains.

The present disclosure has been described herein with regard to preferred embodiments. However, it will be obvious to those skilled in the art that various changes and modifications can be made without changing technical conception and essential features of the present disclosure.

## Claims

1. A binary neural network apparatus comprising:
a binary neural network including a first layer, one or more second layers, and a third layer, wherein the one or more second layers are provided between the first layer and the third layer, and the third layer has a binary input and binary weights and is configured to output a binarized bit sequence; and
a non-binary converter configured to convert the binarized bit sequence into non-binary data and output the non-binary data.

2. The binary neural network apparatus of claim 1, wherein the third layer is a last layer of the binary neural network, and the non-binary converter is configured to convert the binarized bit sequence into the non-binary data by using a predefined linear or nonlinear function.

3. The binary neural network apparatus of claim 1, wherein the third layer is a last layer of the binary neural network, and the non-binary converter is configured to convert the binarized bit sequence into the non-binary data by using a predefined lookup table.

4. The binary neural network apparatus of claim 1, wherein the third layer is a last layer of the binary neural network, and the non-binary converter is configured to convert the binarized bit sequence into the non-binary data by using a position where a last activation bit is located in the binarized bit sequence.

5. The binary neural network apparatus of claim 1, wherein the third layer is a last layer of the binary neural network, and the non-binary converter is configured to convert the binarized bit sequence into the non-binary data by using a number of activation bits in the binarized bit sequence.

6. The binary neural network apparatus of claim 1, wherein the third layer is a last layer of the binary neural network, and the non-binary converter is configured to convert the binarized bit sequence into the non-binary data by using a weighted sum for each position in the binarized bit sequence.

7. The binary neural network apparatus of any of the previous claims, wherein the first layer of the binary neural network has a binary input.

8. The binary neural network apparatus of claim 7, further comprising a first binary converter configured to convert non-binary data into a bit sequence to be used as the binary input of the first layer.

9. The binary neural network apparatus of any of the previous claims, wherein in a training operation, the binary neural network is configured to convert a non-binary ground truth into a ground-truth bit sequence by using a second binary converter, and is trained based on a loss between the converted ground-truth bit sequence and the binarized bit sequence output by the third layer.

10. The binary neural network apparatus of any of the previous claims, wherein in a training operation, in response to the non-binary converter being defined to be differentiable, the binary neural network is trained based on a loss between a non-binary ground truth and non-binary data which is an output of the non-binary converter.

11. A training method of a binary neural network including a first layer, one or more second layers, and a third layer, the method comprising:
obtaining first output data for training data from the first layer;
obtaining second output data for the first output data from the one or more second layers;
obtaining a bit sequence as third output data for the second output data from the third layer having a binary input and binary weights; and
training the binary neural network by calculating a loss of a loss function based on the bit sequence and a non-binary ground truth.

12. The training method of claim 11, further comprising converting the bit sequence into non-binary data by using a non-binary converter,
wherein the calculating of the loss comprises, in response to the non-binary converter being defined to be differentiable, calculating the loss based on the converted non-binary data and the non-binary ground truth.

13. The training method of claim 12, wherein the converting of the bit sequence into the non-binary data comprises converting the bit sequence into the non-binary data by using a position where a last activation bit is located in the bit sequence.

14. The training method of claim 12, wherein the converting of the bit sequence into the non-binary data comprises converting the bit sequence into the non-binary data by using a number of activation bits in the bit sequence, or
wherein the converting of the bit sequence into the non-binary data comprises converting the bit sequence into the non-binary data by using a weighted sum for each position in the bit sequence.

15. The training method of any of claims 11 - 14, wherein the first layer has a binary input,
Wherein the method further comprises, by using a first binary converter, converting non-binary training data into binary training data and providing the binary training data to the first layer; and/or
the training method further comprises, by using a second binary converter, converting the non-binary ground truth into a ground-truth bit sequence,
wherein the calculating of the loss comprises calculating the loss based on the bit sequence and the converted ground-truth bit sequence.
